# EUROPÄISCHE PATENTSCHRIFT

(11) **EP 1 610 911 B1**
(45) Veröffentlichungstag und Bekanntmachung des Hinweises auf die Patenterteilung: **11.05.2016**
(21) Anmeldenummer: 04718294.4
(22) Anmeldetag: 08.03.2004
(51) Int. Cl.: B05D 7/14, B05D 7/00, C09D 7/12, F28F 13/04

(54) **WÄRMETAUSCHER UND VERFAHREN ZUR OBERFLÄCHENBEHANDLUNG EINES SOLCHEN**
HEAT EXCHANGER AND METHOD FOR TREATING THE SURFACE OF SAID HEAT EXCHANGER
ECHANGEUR THERMIQUE ET PROCEDE DE TRAITEMENT DE SURFACE D'UN TEL ECHANGEUR THERMIQUE

(30) Priorität: 31.03.2003 DE 10314701
(43) Veröffentlichungstag der Anmeldung: 04.01.2006
(73) Patentinhaber: MAHLE Behr GmbH & Co. KG, 70469 Stuttgart (DE)
(72) Erfinder: BOGER, Snjezana, 73734 Esslingen (DE); ENGLERT, Peter, 74177 Bad Friedrichshall (DE); FISCHLE, Klaus, 71732 Tamm (DE); MAMBER, Oliver, 71706 Markgröningen (DE); SEDLMEIR, Sabine, 72270 Baiersbronn (DE)
(74) Vertreter: Grauel, Andreas
(86) Internationale Anmeldenummer: PCT/EP2004/002337
(87) Internationale Veröffentlichungsnummer: WO 2004/087339

(56) Entgegenhaltungen:
- EP-A- 0 128 514
- EP-A- 1 154 042
- WO-A-99/52964
- PATENT ABSTRACTS OF JAPAN Bd. 2000, Nr. 14, 5. März 2001 (2001-03-05) & JP 2000 329495 A (NISSAN MOTOR CO LTD), 30. November 2000 (2000-11-30)
- SCHMIDT H: "Multifunctional inorganic-organic composite sol-gel coatings for glass surfaces" JOURNAL OF NON-CRYSTALLINE SOLIDS, NORTH-HOLLAND PHYSICS PUBLISHING. AMSTERDAM, NL, Bd. 178, 1. November 1994 (1994-11-01), Seiten 302-312, XP004067786 ISSN: 0022-3093

## Beschreibung

Die Erfindung betrifft einen Wärmetauscher, insbesondere für ein Kraftfahrzeug, mit einer hydrophilen Oberflächenbeschichtung sowie ein Verfahren zur Oberflächenbehandlung eines solchen.

Bei herkömmlichen Wärmetauschern treten häufig Probleme mit Korrosion, mikrobiologischem Wachstum und Schmutz auf. Diese Probleme haben unter anderem ihre Ursache in einer Niederschlagung von Kondensat aus der Luft, die durch die Wellrippenpakete, die zwischen den von Kältemittel durchströmten Scheiben bzw. Rohren angeordnet sind, strömt. Ferner wird auch Staub und Schmutz angelagert, so dass sich auf der feuchten, verschmutzten Oberfläche Mikroorganismen ansiedeln können, die eine unerwünschte Geruchsbildung zur Folge haben können.

Der Abfluss des Kondensats von der Oberfläche kann durch eine hydrophile Ausgestaltung der Oberfläche des Wärmetauschers unterstützt werden, wobei sich in Folge der Hydrophilie ein dünner Flüssigkeitsfilm bildet, der ständig von der Wellrippenoberfläche abfließen kann. Dies hat einen so genannten Selbstreinigungseffekt oder Spüleffekt zur Folge, wobei eine dauerhafte Ansammlung von Staub und Schmutz reduziert, sowie eine Ansiedlung von Mikroorganismen auf der Oberfläche des Wärmeübertragers vermieden werden kann. Ferner trocknet die Wellrippenoberfläche schneller ab. Dadurch wird die Gesamtleistung des Wärmetauschers aufrechterhalten bzw. verbessert.

Aus der EP 1 154 042 A1 ist ein Mittel zur chemischen Oberflächenbehandlung und von Wärmetauschern bekannt, wobei Silikatpartikel mit einem mittleren Durchmesser von 5 bis 1000 nm und Polyvinylalkohol in wässriger Lösung auf die Oberfläche von Wärmetauschern aufgetragen sind. Zur Vorbehandlung der Oberfläche wird diese zunächst einer saueren Reinigung unterzogen und anschließend eine chrom- oder zirkoniumhaltige Konversionsschicht aufgebaut. Der auf diese Weise vorbereitete Wärmetauscher wird mit den o.g. hydrophilen Chemikalien beschichtet, so dass die entsprechend behandelte Oberfläche hydrophile Eigenschaften aufweist.

Die JP 2000329495 A offenbart einen Wärmetauscher mit einer hydrophilen Beschichtung. Die WO 99/52964 A2 offenbart nanostrukturierte Formkörper und Schichten und deren Herstellung.

Es ist Aufgabe der Erfindung, einen verbesserten Wärmetauscher zur Verfügung zu stellen.

Diese Aufgabe wird gelöst durch einen Wärmetauscher mit den Merkmalen des Anspruchs 1. Vorteilhafte Ausgestaltungen sind Gegenstand der Unteransprüche.

Erfindungsgemäß ist ein Wärmetauscher, insbesondere ein Wärmetauscher für ein Kraftfahrzeug, mit einer hydrophilen Oberflächenbeschichtung, wobei die Oberflächenbeschichtung Nanopartikel, beschichtete Nanopartikel und/oder aufgepfropfte Nanopartikel mit oder aus Oxiden enthält, wobei die Oberflächenbeschichtung weiterhin Nanopartikel, beschichtete Nanopartikel und/oder aufgepfropfte Nanopartikel mit oder aus Oxihydraten und/oder Nitriden und/oder Carbiden enthält und die Oxihydrate und/oder Nitride und/oder Carbide aus Elementen der IV-Hauptgruppe und/oder aus Übergangsmetallen und/oder aus Cer bestehen, wobei die Nanopartikel, beschichteten Nanopartikel und/oder aufgepfropften Nanopartikel in einer wässrigen Dispersion oder Lösung, die einen organischen Binder enthält, und/oder in einer Dispersion oder Lösung auf Basis organischer Dispersions- bzw. Lösungsmittel, die einen organischen Binder enthält, enthalten sind, wobei die Oberflächenbeschichtung antimikrobiell wirkende Bestandteile aufweist. Eine hydrophile Oberflächenbeschichtung stellt sicher, dass sich ein dünner, geschlossener Flüssigkeitsfilm auf der Oberfläche bildet, der ständig von der Wellrippenoberfläche oder aber von den Scheiben/Rohren des Wärmetauschers abfließen kann. Dies hat einen Selbstreinigungseffekt oder Spüleffekt zur Folge, wodurch eine dauerhafte Ansammlung von Staub und Schmutz reduziert, sowie eine Ansiedlung von Mikroorganismen auf der Oberfläche des Wärmeübertragers vermieden werden kann. Ferner trocknet die Wellrippenoberfläche schneller ab.

Bei abgewandelten Ausführungsformen der Erfindung hat die Oberflächenbeschichtung neben oder anstelle der hydrophilen Wirkung eine oder mehrere andere vorteilhafte Wirkungen, wie beispielsweise eine korrosionhemmende oder -verhindernde Wirkung.

Die Nanopartikel bestehen bevorzugt zu annähernd 100% oder vollständig aus Oxiden.

Bei den beschichteten Nanopartikeln können anstelle oder neben Oxiden, die zumindest im Kern der beschichteten Nanopartikel vorgesehen sind, auch anderen Verbindungen in der Beschichtung vorhanden sein. Die Beschichtung der Nanopartikel kann organische und/oder anorganische Komponten, sowie antimikrobiell wirkende organische und/oder anorganische Komponenten beinhalten.

Bei den aufgepfropften Nanopartikeln, handelt es sich um Nanopartikel mit einem Kern mit oder aus Oxiden, welche Seitengruppen tragen. Diese Seitengruppen sind chemisch auf der Oberfläche des Nanopartikelkerns gebunden, z.B. über Sauerstoff- oder Stickstoffbrücken. Um solche Nanopartikel herzustellen werden zum Beispiel bifunktionelle Verbindungen, z.B. Diamine und/oder Dialkohole, eingesetzt. Dadurch können die Oberflächeneigenschaften eines Nanopartikels variiert werden (z.B hydrophob, hydrophil, Stabilisierung in der Dispersion bzw. Lösung). Zudem kann eine Polymerkette mit einer reaktiven Seitenkette, die z.B. eine OH oder COOH oder OR Gruppe enthält, oder eine im Polymernetz nicht abreagierte reaktive Gruppe, z.B. OH oder COOH oder OR, auf das Nanopartikel aufgepfropft werden.

Bevorzugt enthalten die Nanopartikel, wobei der Einfachheit halber hierunter im folgenden auch beschichtete und/oder aufgepfropfte Nanopartikel verstanden werden sollen, soweit nicht ausdrücklich anders erwähnt, Oxide und/oder Oxidhydrate und/oder Nitride und/oder Carbide.

Die Oxidhydrate, Nitride und Carbide bestehen aus Elementen der IV-Hauptgruppe und/oder aus Übergangsmetallen und/oder aus Cer.

Die Nanopartikel sind in einer wässrigen Dispersion oder Lösung, die einen organischen Binder enthält, und/oder in einer Dispersion oder Lösung auf Basis organischer Dispersionsmittel bzw. Lösemittel, die einen organischen Binder enthält, enthalten.

Bevorzugt weisen die Nanopartikel, beschichteten Nanopartikel und die aufgepfropften Nanopartikel einen mittleren Durchmesser von 1 bis 1000 nm auf, insbesondere zwischen 50 und 500 nm.

Erfindungsgemäss weist die Oberflächenbeschichtung antimikrobiell wirkende Bestandteile auf. Diese können Bestandteil der Nanopartikel sein, beispielsweise bei aufgepfropften oder beschichteten Nanopartikeln, oder sie können im restlichen Teil der Oberflächenbeschichtung enthalten sein. Derartige Zusätze verbessern die antimikrobielle Wirkung der Oberflächenbeschichtung und verhindern eine Ansiedlung von Mikroorganismen auf der Oberfläche des Wärmeübertragers oder behindern zumindest eine solche.

Das Auftragen der Oberflächenbeschichtung erfolgt vorzugsweise mittels Tauchen, Fluten oder Sprühen.

Bevorzugt erfolgt eine Vorbehandlung mittels einer sauren oder alkalischen Beize mit anschließender Dekapierung und/oder einer Konversionsbehandlung. Auch diese Vorbehandlung erfolgt vorzugsweise mittels Tauchen, Fluten oder Sprühen. Die Konversionsbehandlung dient dem Aufbau von Passivierungsschichten, die eine sehr feste Verbindung mit der Oberfläche eingehen, so zum Beispiel durch Bildung gemischter Oxide. Eine derartige Passivierungsschicht verhindert unter anderem einen Korrosionsangriff.

Nach der Vorbehandlung kann eine Trocknung erfolgen und nach der eigentlichen Oberflächenbeschichtung ist ein Trockenvorgang notwendig.

Im folgenden werden Beispiele unter Bezugnahme auf die Zeichnung im einzelnen erläutert. In der Zeichnung zeigen:
- Fig. 1: einen Schnitt durch den oberflächennahen Bereich eines Wärmetauschers mit einer Beschichtung,
- Fig. 2: einen Schnitt durch den oberflächennahen Bereich eines Wärmetauschers mit einer Beschichtung

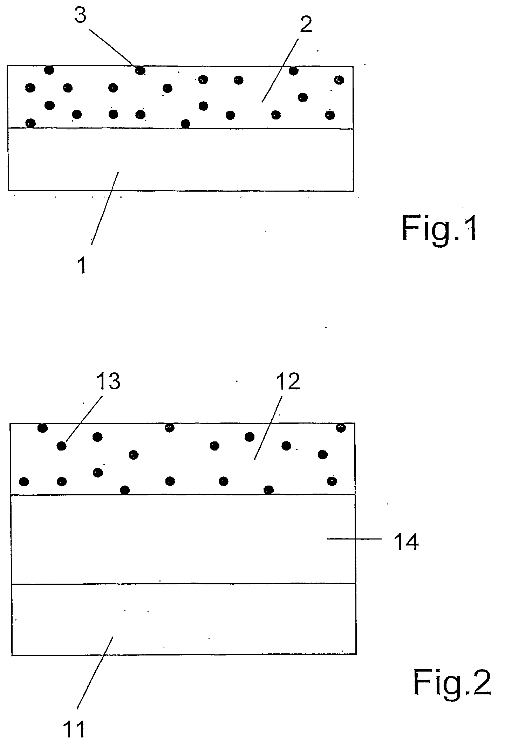

Fig. 1 zeigt den oberflächennahen Bereich eines Wellrippblechs 1 eines Wärmetauschers aus Aluminium gemäß einem Beispiel, der mit einer hydrophilen Oberflächenbeschichtung 2 versehen ist. Hierbei wird diese Oberflächenbeschichtung 2 aus einem Sol gebildet, das Nanopartikel 3 aus im wesentlichen reinem Aluminiumoxid enthält. Die Nanopartikel 3 haben einen mittleren Durchmesser von zwischen 10 und 100 nm und sind relativ gleichmäßig in der gesamten Oberflächenbeschichtung 2 verteilt.

Das Sol weist Alkoxyverbindungen von Aluminium auf, wobei eine Mischung aus reinen Alkoxyverbindungen und Alkoxyverbindungen, bei denen ein Teil der hydrolysierbaren Alkoxyreste durch Alkylreste ausgetauscht ist, verwendet wird.

Das Aufbringen der Oberflächenbeschichtung 2 erfolgt nach einer Oberflächenreinigung mit einer sauren Beize mittels Tauchen in einer kolloidalen Sol-Lösung, in der Nanopartikel aus Aluminiumoxid dispergiert sind. Anschließend wird ein Trocknungsprozess durchlaufen.

Fig. 2 zeigt einen oberflächennahen Bereich eines Wellrippbteches 11 eines Wärmetauschers gemäß einem Beispiel. Hierbei ist zwischen einer hydrophilen Oberflächenbeschichtung 12, die Nanopartikel 13 enthält, eine Konversionsschicht 14 vorgesehen. Die Konversionsschicht 14 weist unter anderem Mischoxide aus Aluminium und Zirkonium auf.

Bei den Nanopartikeln 13 handelt es sich um sogenannte aufgepfropften Nanopartikel, welche Seitengruppen tragen. Dabei enthalten die Nanopartikel 13 einen oxidhaltigen Kern, der von bifunktionellen organischen Verbindungen, die chemisch auf der Oberfläche des Nanopartikelkerns gebunden sind, umgeben ist. Die bifunktionellen organischen Verbindungen weisen unter anderem antimikrobiell wirkende Seitengruppen auf. Die eigentliche Oberflächenbeschichtung 12 besteht aus einer organischen Matrix, welche einen organischen Binder enthält. Diese organische Matrix wird aus einer organischen Dispersion oder Lösung, in welcher die aufgepfropften Nanopartikel 13 verteilt sind, aufgebaut. Der oxidhaltige Kern der aufgepfropften Nanopartikel, 13 besteht im wesentlichen aus Zirkoniumdioxid und Titandioxid.

Zur Vorbereitung der Oberfläche für das Aufbringen der eigentlichen Oberflächenbeschichtung 13 wird diese mit der Mischoxide aus Aluminium und Zirkonium enthaltenden Konversionsschicht 14 versehen. Hierfür wird eine Zirkonium enthaltende Chemikalie mittels Tauchen aufgetragen, und es bilden sich gemischte Oxide aus Aluminium und Zirkonium, so dass eine sehr feste Verbindung mit der Oberfläche eingegangen wird.

Das Aufbringen der Oberflächenbeschichtung 12 kann nach einem Trocknungsvorgang erfolgen. Das Aufbringen der Oberflächenbeschichtung 12 erfolgt mittels Tauchen mit einer die Nanopartikel 13 enthaltenden Dispersion. Anschließend wird ein weiterer Trocknungsprozess durchlaufen.

## Patentansprüche

1. Wärmetauscher mit einer hydrophilen Oberflächenbeschichtung (2; 12), wobei die Oberflächenbeschichtung (2; 12) Nanopartikel (3), beschichtete Nanopartikel und/oder aufgepfropfte Nanopartikel mit oder aus Oxiden enthält, wobei die Oberflächenbeschichtung (12) weiterhin Nanopartikel, beschichtete Nanopartikel und/oder aufgepfropfte Nanopartikel mit oder aus Oxihydraten und/oder Nitriden und/oder Carbiden enthält und die Oxihydrate und/oder Nitride und/oder Carbide aus Elementen der IV-Hauptgruppe und/oder aus Übergangsmetallen und/oder aus Cer bestehen, wobei die Nanopartikel (3), beschichteten Nanopartikel und/oder aufgepfropften Nanopartikel (13) in einer wässrigen Dispersion oder Lösung, die einen organischen Binder enthält, und/oder in einer Dispersion oder Lösung auf Basis organischer Dispersions- bzw. Lösungsmittel, die einen organischen Binder enthält, enthalten sind, wobei die Oberflächenbeschichtung (2; 12) antimikrobiell wirkende Bestandteile aufweist.

2. Wärmetauscher nach Anspruch 1, **dadurch gekennzeichnet, dass** Oxide der Elemente der II-Hauptgruppe und/oder der III-Hauptgruppe und/oder Oxide von Germanium, Zinn, Blei und/oder Oxide der Übergangsmetalle und/oder Oxide von Zink und/oder Oxide von Cer vorgesehen sind.

3. Wärmetauscher nach Anspruch 1, **dadurch gekennzeichnet, dass** ein Übergangsmetall der IV- und/oder V-Nebengruppe angehört oder Zink ist.

4. Wärmetauscher nach einem der vorhergehenden Ansprüche, **dadurch gekennzeichnet, dass** die Nanopartikel (3), beschichteten Nanopartikel und/oder aufgepfropften Nanopartikel (13) einen mittleren Durchmesser von 1 bis 1000 nm aufweisen.

5. Verfahren zum Beschichten eines Wärmetauschers mit einer insbesondere hydrophilen Oberflächenbeschichtung, wobei eine Nanopartikel (3), beschichtete Nanopartikel und/oder aufgepfropfte Nanopartikel (13) enthaltende Oberflächenbeschichtung (2; 12) gemäß einem der vorstehenden Ansprüche aufgetragen wird.

6. Verfahren zum Beschichten eines Wärmetauschers nach Anspruch 5, **dadurch gekennzeichnet, dass** die Oberflächenbeschichtung (2; 12) mittels Tauchen, Fluten und/oder Sprühen aufgebracht wird.

7. Verfahren zum Beschichten eines Wärmetauschers nach einem der Ansprüche 5 oder 6, **dadurch gekennzeichnet, dass** eine Vorbehandlung mittels einer sauren oder alkalischen Beize mit anschließender Dekapierung und/oder einer Konversionsbehandlung erfolgt.

8. Verfahren zum Beschichten eines Wärmetauschers nach Anspruch 7, **dadurch gekennzeichnet, dass** bei der Konversionsbehandlung Mischoxide und/oder Mischfluoride entstehen.

9. Verfahren zum Beschichten eines Wärmetauschers nach einem der Ansprüche 5 bis 8, **dadurch gekennzeichnet, dass** nach einer Vorbehandlung mittels einer sauren oder alkalischen Beize mit anschließender Dekapierung und/oder einer Konversionsbehandlung ein Trockenprozess erfolgt.

10. Verfahren zum Beschichten eines Wärmetauschers nach einem der Ansprüche 5 bis 9, **dadurch gekennzeichnet, dass** dem Vorgang des Aufbringens der Oberflächenbeschichtung (2; 12) ein Trockenvorgang folgt.

## Claims

1. A heat exchanger having a hydrophilic surface coating (2; 12), wherein the surface coating (2; 12) contains nanoparticles (3), coated nanoparticles and/or grafted nanoparticles comprising or consisting of oxides, wherein the surface coating (12) further contains nanoparticles, coated nanoparticles and/or grafted nanoparticles comprising or consisting of hydrated oxides and/or nitrides and/or carbides and the hydrated oxides and/or nitrides and/or carbides consist of elements from main group IV and/or of transition metals and/or of cerium, wherein the nanoparticles (3), coated nanoparticles and/or grafted nanoparticles (13) are contained in an aqueous dispersion or solution, which contains an organic binder, and/or in a dispersion or solution based on organic dispersants or solvents, which contains an organic binder, wherein the surface coating (2; 12) includes constituents with an antimicrobial action.

2. The heat exchanger as claimed in claim 1, **characterised in that** oxides of the elements from main group II and/or from main group III and/or oxides of germanium, tin, lead and/or oxides of the transition metals and/or oxides of zinc and/or oxides of cerium are provided.

3. The heat exchanger as claimed in claim 1, **characterised in that** a transition metal belongs to transition group IV and/or V or is zinc.

4. The heat exchanger as claimed in one of the preceding claims, **characterised in that** the nanoparticles (3), coated nanoparticles and/or grafted nanoparticles (13) have a mean diameter from 1 to 1000 nm.

5. A method for coating a heat exchanger with an in particular hydrophilic surface coating, wherein a surface coating (2; 12) containing nanoparticles (3), coated nanoparticles and/or grafted nanoparticles (13) is applied according to one of the preceding claims.

6. The method for coating a heat exchanger as claimed in claim 5, **characterised in that** the surface coating (2; 12) is applied by means of dipping, flooding and/or spraying.

7. The method for coating a heat exchanger as claimed in one of claims 5 or 6, **characterised in that** a pre-treatment by means of an acidic or alkaline pickle is carried out, with subsequent scale removal and/or a conversion treatment.

8. The method for coating a heat exchanger as claimed in claim 7, **characterised in that** mixed oxides and/or mixed fluorides are formed during the conversion treatment.

9. The method for coating a heat exchanger as claimed in one of claims 5 to 8, **characterised in that** a drying process is carried out after a pre-treatment by means of an acidic or alkaline pickle with subsequent scale removal and/or a conversion treatment.

10. The method for coating a heat exchanger as claimed in one of claims 5 to 9, **characterised in that** the operation of applying the surface coating (2; 12) is followed by a drying operation.

## Revendications

1. Echangeur de chaleur comprenant un revêtement de surface hydrophile (2; 12), où le revêtement de surface (2; 12) contient des nanoparticules (3), des nanoparticules recouvertes d'oxydes et / ou des nanoparticules greffées se composant d'oxydes, où le revêtement de surface (12) contient en outre des nanoparticules, des nanoparticules recouvertes d'oxyhydrates et / ou de nitrures et / ou de carbures, et / ou des nanoparticules greffées se composant de ces mêmes éléments, et les oxyhydrates et / ou les nitrures et / ou les carbures se composent d'éléments du groupe principal IV et / ou de métaux transitoires et / ou de cérium, où les nanoparticules (3), les nanoparticules recouvertes et / ou les nanoparticules greffées (13) sont contenues dans une dispersion ou solution aqueuse qui contient un liant organique, et / ou sont contenues dans une dispersion ou solution à base de dispersants ou de solvants organiques, laquelle dispersion ou solution contient un liant organique, où le revêtement de surface (2; 12) présente des composants à action antimicrobienne.

2. Echangeur de chaleur selon la revendication 1, **caractérisé en ce que** des oxydes des éléments du groupe principal II et / ou du groupe principal III et / ou des oxydes de germanium, d'étain, de plomb et / ou des oxydes des métaux transitoires et / ou des oxydes de zinc et / ou des oxydes de cérium sont prévus.

3. Echangeur de chaleur selon la revendication 1, **caractérisé en ce qu'**un métal transitoire appartient au groupe secondaire IV et / ou V, ou bien est du zinc.

4. Echangeur de chaleur selon l'une quelconque des revendications précédentes, **caractérisé en ce que** les nanoparticules (3), les nanoparticules recouvertes et / ou les nanoparticules greffées (13) présentent un diamètre moyen allant de 1 nm à 1000 nm.

5. Procédé pour le revêtement d'un échangeur de chaleur ayant un revêtement de surface en particulier hydrophile, où est appliqué un revêtement de surface (2; 12) contenant des nanoparticules (3), des nanoparticules recouvertes et / ou des nanoparticules greffées (13) conformément à l'une quelconque des revendications précédentes.

6. Procédé pour le revêtement d'un échangeur de chaleur selon la revendication 5, **caractérisé en ce que** le revêtement de surface (2; 12) est appliqué par immersion, par aspersion et / ou par pulvérisation.

7. Procédé pour le revêtement d'un échangeur de chaleur selon l'une des revendications 5 ou 6, **caractérisé en ce qu'**un prétraitement est réalisé au moyen d'un mordançage acide ou alcalin comprenant un décapage effectué ensuite et / ou un traitement de conversion.

8. Procédé pour le revêtement d'un échangeur de chaleur selon la revendication 7, **caractérisé en ce que** des oxydes mixtes et / ou des fluorures mixtes se forment au cours du traitement de conversion.

9. Procédé pour le revêtement d'un échangeur de chaleur selon l'une quelconque des revendications 5 à 8, **caractérisé en ce qu'**un processus de séchage intervient après un prétraitement réalisé au moyen d'un mordançage acide ou alcalin comprenant un décapage effectué ensuite et / ou un traitement de conversion.

10. Procédé pour le revêtement d'un échangeur de chaleur selon l'une quelconque des revendications 5 à 9, **caractérisé en ce qu'**un processus de séchage vient après le processus d'application du revêtement de surface (2; 12).
